# NEUE EUROPÄISCHE PATENTSCHRIFT

(11) **EP 2 586 712 B2**
(45) Veröffentlichungstag und Bekanntmachung des Hinweises auf die Entscheidung über den Einspruch: **14.02.2018**
(45) Hinweis auf die Patenterteilung: 07.05.2014
(21) Anmeldenummer: 11187219.8
(22) Anmeldetag: 31.10.2011
(51) Int. Cl.: B65B 5/10, B65B 35/24, B65B 35/36, B65B 35/44, B65G 15/22, B65G 47/90, B65B 57/12, B65B 57/14

(54) **Verfahren und Vorrichtung zum Einlegen von Produkten in Behälter in einer Roboterstrasse**
Method and device for inserting products into containers in a robot street
Procédé et dispositif d'insertion de produits dans des récipients dans une suite de robots

(43) Veröffentlichungstag der Anmeldung: 01.05.2013
(73) Patentinhaber: Veltru AG, 8245 Feuerthalen (CH)
(72) Erfinder: Renner, Jürgen, 78176 Blumberg (DE); Schuler, Hans Andrea, 8245 Feuerthalen (CH)
(74) Vertreter: Hepp Wenger Ryffel AG

(56) Entgegenhaltungen:
- EP-A1- 2 233 400
- EP-A1- 2 277 020
- EP-A1- 2 520 497
- EP-A2- 2 184 233
- WO-A1-2008/003350
- DE-A1-102008 055 471
- US-B2- 8 015 778

## Beschreibung

### Technisches Gebiet

Die Erfindung betrifft ein Verfahren zum Einlegen von Produkten in Behälter in einer Roboterstrasse gemäss den Oberbegriffen der unabhängigen Ansprüche.

### Stand der Technik

Unter Roboterstrasse versteht man eine Anlage mit mehr als einem Roboter, welche sich die Aufgabe teilen, Produkte ab einem Produkteband zu greifen und in Behälter auf einem Behältertransport abzulegen.

In der Regel sind die Roboter ortsfest montiert und die Produkte und Behälter werden an den Robotern vorbeigeführt, weshalb im folgenden nur noch von dieser Bauform gesprochen wird, ohne die Erfindung hierauf zu beschränken, da im Prinzip auch die Produkte und/oder die Behälter stillstehen und die Einlegeroboter demgegenüber bewegt werden könnten.

Ein Behälter kann auch eine Kettenteilung oder sonst eine die Lage von einem oder mehreren Produkten bestimmendes Element sein. Entsprechend kann es sich bei einem Behältertransport um ein Förderband mit Behältern oder auch eine Tiefziehmaschine oder eine Förderkette handeln. Der Transport kann ein- oder mehrspurig ausgeführt sein.

Aus Sicht einer zentralen Steuerung oder der einzelnen Steuerungen jedes Roboters einer solchen Roboterstrasse besteht kein Unterschied, ob es sich um Behälter oder Mulden oder kartesich definierte Ablagepositionen handelt.

In der Praxis werden die zu befüllenden Behälter meist auf einer ersten Transportvorrichtung angeliefert und dort angestaut. Anschliessend werden die Behälter von der ersten Transportvorrichtung auf eine zweite Transportvorrichtung, effektiv das eigentliche Behälterband, übergeben, auf welcher das Füllen mit den Produkten geschieht, und nach vollständiger Befüllung auf eine dritte Transportvorrichtung für den Abtransport der befüllten Behälter übergeben. Bei der Befüllung von ortsfest mit dem Behälterband verbundenen Behältern, insbesondere Mulden einer Tiefziehmaschine oder Einlaufketten von Schlauchbeutelmaschinen, erfolgt dagegen die Heranführung, Befüllung und der Abtransport der Behälter auf einer einzigen Transportvorrichtung.

Erstes Ziel einer solchen Anordnung ist es, die Behälter komplett zu befüllen und gleichzeitig möglichst alle Produkte abzuräumen.

Ein gattungsgemässes Verfahren, welches diese Ziele erreicht, ist aus EP 0'856'465 B1 bekannt. Hier werden Produkte und Behälter bei parallelen Transporteinrichtungen für Produkte und Behälter im Gegenstrom entlang einer Roboterstrasse geführt. Bei sich einfach oder mehrfach kreuzenden Transporteinrichtungen wird die Transportrichtung des Produktbandes und des Behälterbandes ebenfalls so gewählt, dass das Prinzip der Gegenstromwirkweise aufrecht erhalten bleibt. Dabei wird die Relativgeschwindigkeit der unregelmässig angelieferten Produkte zu den angelieferten Behältern, aber auch die Anlieferung des nächsten zu befüllenden Behälters, von der Steuerung des in Förderrichtung der Behälter letzten oder, bei dessen Ausfall, vorletzten Roboters so gesteuert, dass nur vollständig gefüllte Behälter den Arbeitsbereich dieses letzten Roboters verlassen. Sowohl das Aufgreifen der Produkte, als auch das Ablegen der Produkte erfolgen dabei, wie in DE 42 08 818 C2 gezeigt, durch Aufsynchronisation des Roboters auf das bewegte Produktband oder Behälterband.

Die genannte Ausführung neigt bei Produktionsschwankungen zu Schwingeffekten über die ganze Roboterstrasse. Dabei arbeiten die Roboter abwechselnd an deren Leistungsgrenze während andere praktisch still stehen, um dann ihrerseits zu stehen, während die anderen an der Leistungsgrenze arbeiten. Die Schwingeffekte reduzieren die Anlagenleistung weit unter die theoretische Summe der Leistungsfähigkeit der Einzelroboter und auch weit unter die Leistungsfähigkeit einer stabil arbeitenden Roboterstrasse.

Eine entsprechende verbesserte Ausführung zeigt EP 2 236 424 A1, bei welcher die Produkte und Behälter im Gegenstrom herangeführt werden und implizit ein Lastausgleich zwischen den Robotern erfolgt und die Schwingungsneigung des Systems reduziert wird.

Die genannten Ausführungen in Gegenstrom oder Gegenstromwirkweise haben den Nachteil, dass auch der Produktionsfluss gegenläufig ist. Dies ist insbesondere bei Anlagen mit hohen hygienischen Anforderungen ein gewichtiger Nachteil. Auch in anderen Anlagen wird in der Regel nach der Roboterstrasse wieder ein ,normaler' Produktionsfluss gesucht, indem das Behältertransportsystem über eine Kurve die Behälter in Produkte-Laufrichtung dreht und an der Roboterstrasse vorbei führt. Dies führt aber minimal zu zusätzlichen Transportsystemen. Ausserdem ist bei gewissen Transportsystemen wie Schlauchpackmaschinen-Ketten eine solche Änderung der Laufrichtung technisch nur schwierig realisierbar.

Eine vorteilhafte Ausführung würde entsprechend die Roboterlinie im Gleichstrom zeigen. Der Nachteil der Gleichstrom-Ausführung liegt darin, dass am Ende der Roboterlinie wenige Lücken in den Behältern mit wenigen noch verfügbaren Produkten gefüllt werden müssen. Eine entsprechende Ausführung zeigt DE 195 22 368 C2. Durch das Zählen der Produkte am Einlauf und koordinierte Einsteuern von Behältern, kann eine vollständige Befüllung der Behälter bei minimalem Überlauf gewährleistet werden.

Dabei ist dort vorgesehen, dass die Behälter möglichst mit gleicher Geschwindigkeit parallel neben den für einen Behälter bestimmten Produkten bewegt werden. Das erschwert den Einsatz von Behältern, welche nur eine geringe Füllanzahl von Produkten aufnehmen, da dort mit mehreren Behälterbändern gearbeitet werden muss. Umgekehrt ist bei Behältern, welche eine grosse Füllanzahl von Produkten aufnehmen, der Abstand der Behälter auf dem Behälterband unnötig gross zu wählen. Auch diese Ausführung neigt stark zum Schwingen.

EP 1 285 851 B1 zeigt eine Roboterstrasse, bei welcher die Einlegeroboter aufgrund der verfügbaren Produkte und aufgrund der freien Behälterpositionen so angesteuert werden, dass die Einlegeroboter möglichst gleichmässig ausgelastet sind. Dabei wird aufgrund von einzuhaltenden Nebenbedingungen die Leistung der Einlegeroboter und die Geschwindigkeit des Behälterbandes laufend bestimmt. Die Berechnung der entsprechenden zeitdiskreten Gleichungssysteme und deren Optimierung erweist sich in der Praxis als ausserordentlich rechenintensiv und erfordert entsprechend leistungsfähige Steuerungsrechner.

Alle genannten Ausführungen im Gleichstrom passen die Behälterdichte dem Produktestrom derart an, dass gleich viele Ablagepositionen wie Produkte zur Verfügung stehen. Dies lässt sich unter Berücksichtigung von Produktionsschwankungen praktisch nur mit gleich schnell laufenden Transportsystemen für Behälter und Produkte realisieren. Die Behälterdichte wird dabei über den Abstand der Behälter eingestellt. Dies wiederum bedingt, dass die Behälter einzelne Einheiten bilden und nicht etwa Ketten einer Schlauchpackmaschine oder eines Sideloaders (Kartonierer).

Ein anderer Ansatz zur Optimierung des Wirkungsgrades von Roboterstrassen zeigt EP 1 352 831 B1. Mittels Staustrecken kann der Produkte- und Behälterstrom entkoppelt werden. Der Füllgrad der Staustrecken wird zur Einsteuerung von Behältern genutzt.

Als weiteres, bisher nicht genanntes Kriterium für gattungsgemässe Anlagen kann ein zusätzliches Sortierkriterium zum Tragen kommen. Typisches Beispiel ist die Berücksichtigung der Masse von Produkten zum Bilden von gleichgewichtigen Packungen. Zur optimalen Ausnutzung der statistischen Verteilung ist ein Ziel, der Roboterstrasse eine möglichst hohe Anzahl von Kavitäten und Produkten zur Bearbeitung vorzuhalten. Je höher die Anzahl der zur Verfügung stehenden Positionen zu einem bestimmten Zeitpunkt, desto höher die Wahrscheinlichkeit einer statistisch sinnvollen Kombinatorik. Durch die Reduktion der Behälterdichte zur Realisierung von Gleichstrom wird insbesondere im Teillastbereich der Anlage dieses Ziel untergraben.

Es ist daher die Aufgabe gemäss der vorliegenden Erfindung, ein Verfahren zu schaffen, bei welcher im Gleichstrom oder im Gleichstromprinzip (siehe dazu als Beispiel auch US 8,015,778 B2), also unter Wahrung des Produktionsflusses, sichergestellt werden kann, dass eine grösstmögliche Dichte von Produkten und Behältern vorliegt, die Behälter vollständig befüllt werden können ohne dass die Effizienz der Anlage sich verschlechtert.

### Darstellung der Erfindung

Eine Vorrichtung zum Einsetzen von mindestens einer Sorte von herangeführten Produkten in eine bestimmte Anzahl von Produkten aufnehmende Behälter weist mindestens zwei Einlegeroboter definierend einen Umsetzbereich auf. Ausserdem umfasst die Vorrichtung mindestens eine Transporteinrichtung zum Transportieren der Produkte und mindestens eine Transporteinrichtung zum Transportieren der Behälter, welche im Gleichstrom oder in Gleichstromwirkweise arbeiten. Die Transporteinrichtung der Produkte weist innerhalb des Umsetzbereichs mindestens eine Trennstelle in Laufrichtung auf, welche die Transporteinrichtung der Produkte in mindestens zwei unabhängig ansteuerbare Transportabschnitte aufteilt. Diese Transportabschnitte sind hintereinander angeordnet.

Hier und im Folgenden wird unter einem Behälter eine Einrichtung verstanden, welche eine bestimmte Anzahl von Ablagepositionen zur Aufnahme von Produkten aufweist. Ein Behälter kann beispielsweise ein physikalischer Behälter oder ein virtueller Behälter auf einem Transportband, einer Förderkette oder auf einem Kunststoffband für Schlauchpackmaschinen sein. Unter einer Ablageposition wird sowohl eine diskret definierte Position zur Ablage der Produkte als auch ein blosses Platzangebot im Behälter verstanden.

Unter Umsetzbereich der Vorrichtung wird hier und im Folgenden derjenige Bereich verstanden, in welchem die umzusetzenden Produkte von den Einlegerobotern erfasst und in die entsprechenden zu befüllenden Behälter umgesetzt werden. Im Gegensatz hierzu wird unter dem Arbeitsbereich eines Einlegeroboters derjenige Bereich verstanden, welcher vom Greifer eines einzelnen Einlegeroboters abgedeckt wird. Die Arbeitsbereiche der einzelnen Einlegeroboter können sich überschneiden. Die Einlegeroboter können aber auch so angeordnet sein, dass sich die Arbeitsbereiche nicht überschneiden. Der Umsetzbereich der Vorrichtung umfasst alle Arbeitsbereiche aller Einlegeroboter inklusive eventuell vorhandener Zwischenräume zwischen den einzelnen Arbeitsbereichen und beginnt mit dem Arbeitsbereich des ersten Einlegeroboters und endet mit dem Arbeitsbereich des letzten Einlegeroboters.

Unter einer Transporteinrichtung wird ein Fördermittel verstanden, welches geeignet ist, Produkte oder Behälter durch den Umsetzbereich zu führen. In der Praxis werden Produkte oft auf Bändern oder Gitterrosten transportiert. Es sind aber auch anderer Systeme wie Kettenförderer, Vibrationsförderer, Backblechförderer, die Kette eine Schlauchpackmaschine oder einer Tiefziehmaschine als entsprechende Transporteinrichtung bekannt. Die Produkte und Behälter können in einem gegebenen, regelmässigen Muster oder auch frei und stochastisch verteilt auf der Transporteinrichtung liegen. Sie können in einer Reihe hintereinander oder auch nebeneinander auf der Transporteinrichtung befördert werden. Die Transporteinrichtung zum Transportieren der Produkte und/oder der Behälter kann ein- oder mehrspurig ausgeführt sein.

Unter Sorte von Produkten wird verstanden, dass die Produkte gemeinsame Merkmale aufweisen und bezüglich des Umsetzens gleichwertig sind. Die Produkte können innerhalb der gleichen Sorte weitere Merkmale aufweisen, welche für den Umsetzvorgang relevant sind. Beispielsweise kann das Gewicht oder die Farbe von Produkten einer Sorte unterschiedlich sein und als Kriterium für den Umsetzvorgang herangezogen werden.

Durch die Trennung der Transporteinrichtung an der Trennstelle und die unabhängige Ansteuerung der Transportabschnitte wird ermöglicht, dass im Falle des Ausräumens der Transportvorrichtung durch einen Einlegeroboter die entstandene Lücke nicht an den nachfolgenden Einlegeroboter übergeben wird. Durch Entkopplung der Geschwindigkeit der Transportabschnitte kann auf dem einer Trennstelle folgenden Transportabschnitt ein lückenloser Transport von Produkten sichergestellt werden, indem der Transportabschnitt entsprechend so lange verlangsamt oder angehalten wird, bis auf dem der Trennstelle vorgelagerten Transportabschnitt wieder Produkte weitergegeben werden können.

Um Produkte an der Trennstelle vom ersten auf den folgenden Transportabschnitt weiter zu transportieren, müssen beiden Transportabschnitte vorwärts bewegt werden. Vorzugsweise werden die Geschwindigkeiten der beiden Transportabschnitte gekoppelt, so dass die Produkte ähnlich wie auf einem Transportsystem ohne Trennstelle transportiert werden.

Die aus dem Stand der Technik bekannte zwangsweise Kopplung der Transportsysteme bei Vorrichtungen im ,Gleichstromprinzip' kann durchbrochen werden und jedem Einlegeroboter werden jederzeit Produkte zur Verfügung gestellt.

Jeder Trennstelle kann ein Sensor zur Überprüfung der Anwesenheit von Produkten vor der Trennstelle zugeordnet sein. Der Sensor kann ein physischer Sensor, beispielsweise eine Lichtschranke oder ein Bildverarbeitungssystem sein, oder virtuell auf der Steuerung abgebildet sein, beispielsweise durch eine Kamera mit entsprechender Produkterkennung unter Berücksichtigung der bereits entfernten Produkte. Unter Anwesenheit wird verstanden, dass sich mindestens ein Produkt unmittelbar vor der Trennstelle auf der Transporteinrichtung befindet. Der Sensor überprüft die Anwesenheit von Produkten auf der gesamten Breite der Transporteinrichtung quer zur Laufrichtung der Produkte. Das Überprüfen der Anwesenheit von Produkten erlaubt beispielsweise ein Erkennen von Lücken, so dass der nachfolgende Transportabschnitt verlangsamt oder angehalten werden kann. Umgekehrt erlaubt die Erkennung der Anwesenheit von Produkten rechtzeitig die Kopplung der Geschwindigkeiten der Transportabschnitte, um einen kontinuierlichen Weitertransport der Produkte über die Trennstelle zu gewährleisten.

Die Vorrichtung kann Steuerungsmittel aufweisen, welche derart ausgebildet sind, dass die Transportabschnitte in Abhängigkeit eines Signals des Sensors angesteuert werden. Beispielsweise kann wie oben erwähnt bei fehlenden Produkten der Sensor ein Signal ausgeben, was die Steuerungsmittel zum Anhalten oder Verlangsamen des auf die Trennstelle nachfolgenden Transportabschnittes veranlasst.

Die Vorrichtung kann Steuerungsmittel aufweisen, welche derart ausgebildet sind, dass die Einlegeroboter in Bereichen mit geringer Produktedichte die Produkte ergreifen. Diese Steuerungsmittel können beispielsweise in den Steuerungen der Einlegeroboter integriert sein oder es kann sich um eine zentrale Leitsteuerung handeln. Unter Produktedichte wird im Folgenden die Anzahl Produkte in einem relevanten Bezugsbereich verstanden. Beispielsweise kann das Transportsystem in Laufrichtung in virtuelle Segmente unterteilt werden, in denen die Anzahl der Produkte und daraus die Produktedichte bestimmt werden. Wenn die Einlegeroboter in Bereichen oder virtuellen Segmenten mit geringer Produktedichte greifen, können komplette virtuelle Segmente ausgeräumt werden. Es werden bewusst Lücken gebildet, welche an der nächsten Trennstelle geschlossen werden können. Gleichzeitig können andere virtuelle Segmente möglichst komplett an nachfolgende Einlegeroboter übergeben werden, also mit maximaler Dichte an Produkten.

Eine Belegung der Transporteinrichtung oder des Transportabschnittes mit maximaler Produktdichte erleichtert Aufgaben, bei welchen zusätzliche, statistische Zielgrössen berücksichtigt werden müssen. Über die hohe Dichte an Produkten kann statistisch die Chance maximiert werden, dem Einlegeroboter ein bezüglich zusätzlicher Merkmale optimales Produkt zu präsentieren. Beispielsweise kann beim Beladen von gleichgewichtigen Packungen aus einer maximalen Anzahl von Produkten jenes mit dem idealen Ergänzungsgewicht ergriffen werden.

Die Vorrichtung kann mehrere Transporteinrichtungen zum Transportieren der Behälter aufweisen, welche in etwa senkrecht zur Transporteinrichtung der Produkte stehen. Damit kann die Anzahl möglicher Ablagepositionen im Arbeitsbereich des Einlegeroboters optimiert werden. Die vollständig befüllten Behälter können auf einem gemeinsamen Abführband gesammelt werden. Unter in etwa senkrecht wird dabei verstanden, dass die Transporteinrichtungen für die Behälter in einem Winkel von 45° bis 135° zur Transporteinrichtung der Produkte angeordnet sind. Die Erfindung betrifft ein Verfahren gemäss Anspruch 1 zum Einsetzen von mindestens einer Sorte von herangeführten Produkten in eine bestimmte Anzahl von Produkten aufnehmende Behälter mittels einer Vorrichtung, wie vorgängig beschrieben, und umfasst die Schritte:
- Transportieren der Produkte auf einer Transporteinrichtung zu einem Umsetzbereich von Einlegerobotern,
- Ergreifen der Produkte im Umsetzbereich durch die Einlegeroboter,
- Einsetzen der Produkte in Behälter,
- Überprüfen der Anwesenheit von Produkten auf der Transportvorrichtung für die Produkte vor einer Trennstelle der Transportvorrichtung,
- Steuern eines auf die Trennstelle folgenden Transportabschnittes in Abhängigkeit vom Resultat der vorgelagerten Überprüfung.

Dabei weist die Vorrichtung mindestens zwei Einlegeroboter definierend einen Umsetzbereich, mindestens eine Transporteinrichtung mit in Laufrichtung mindestens zwei durch eine Trennstelle innerhalb des Umsetzbereiches voneinander getrennte Transportabschnitte zum Transportieren der Produkte und mindestens eine Transporteinrichtung zum Transportieren der Behälter auf.

Bei fehlenden Produkten vor einer Trennstelle kann der nachfolgende Transportabschnitt verlangsamt oder gestoppt werden. Im Falle des Ausräumens der Transportvorrichtung durch einen Einlegeroboter und entsprechender Steuerung des nachfolgenden Transportabschnittes wird ermöglicht, dass eine entstandene Lücke eliminiert und nicht an den nachfolgenden Einlegeroboter übergeben wird. Der auf die Trennstelle nachfolgende Transportabschnitt kann so lange modifiziert betrieben, insbesondere verlangsamt oder angehalten werden, bis auf dem der Trennstelle vorgelagerten Transportabschnitt wieder Produkte erkannt und weitergegeben werden können. Es wird verhindert, dass der Einlegeroboter des nachfolgenden Transportabschnittes einen leeren Transportabschnitt vorfindet und nicht arbeiten kann.

Die Einlegeroboter können die Produkte in Bereichen oder virtuellen Segmenten mit geringer Dichte von Produkten ergreifen. Damit können Bereiche kompletter Lücken und Bereiche mit möglichst hoher Dichte an Produkten erzeugt werden. Die Bereiche mit kompletten Lücken können an der nächsten Trennstelle ausgeschieden werden.

Die Transporteinrichtungen für die Produkte und die Behälter können im Gleichstrom oder in Gleichstromwirkweise herangeführt werden und der letzte oder bei dessen Ausfall zweitletzte Einlegeroboter der Vorrichtung kann die Geschwindigkeit der Transporteinrichtung zum Transport der Behälter derart steuern, dass nur volle Behälter die Vorrichtung verlassen. Unter Gleichstrom wird verstanden, dass die Laufrichtung der Transporteinrichtungen der Produkte und der Behälter gleichgerichtet sind. Die Steuerung der Transporteinrichtung der Behälter erlaubt, den Transport der Behälter anzuhalten, bevor ein Behälter unvollständig den Arbeitsbereich des letzten und bei dessen Ausfall zweitletzten Einlegeroboter verlässt. Vorzugsweise wird die Transporteinrichtung derart gesteuert, dass sich eine möglichst konstante Geschwindigkeit einstellt, bei der alle Behälter komplett gefüllt werden und gleichzeitig auch dem letzten und bei dessen Ausfall zweitletzten Einlegeroboter immer freie Ablagepositionen vorliegen.

In Laufrichtung der Behälter kann für jeden Arbeitsbereich der Einlegeroboter ein Sollfüllstand aller Ablagepositionen im Arbeitsbereich oder der Ablagepositionen von jedem Behälter ansteigend festgelegt werden. Ausserdem kann jeder Einlegeroboter derart gesteuert werden, dass der Einlegeroboter nur bis zum Erreichen des Sollfüllstandes für seinen Arbeitsbereich Produkte umsetzt. Somit kann einerseits erreicht werden, dass sich eine gleichmässige Arbeitsbelastung über alle Einlegeroboter der Vorrichtung einstellt. Schwingungen im System können effektiv gedämpft oder gar vermieden werden. Der Sollfüllstand kann von einer zentralen Steuerung aufgrund weiterer Daten wie Angabe über ausgefallene Einlegeroboter auch im Betrieb der Anlage jederzeit neu bestimmt werden. Es ist auch möglich, insbesondere bei Anlagen mit einem Behälterband, welches nicht von der Vorrichtung gesteuert werden kann, die Roboterleistung als Funktion der Geschwindigkeiten der Abschnitte der Transportvorrichtung der Produkte oder anhand der Anzahl Produkte am Eingang der Anlage zu bestimmen.

### Beschreibung der Erfindung

Weitere Einzelmerkmale und Vorteile der Erfindung ergeben sich aus der nachfolgenden Beschreibung der Ausführungsbeispiele und den Zeichnungen. Es zeigen:

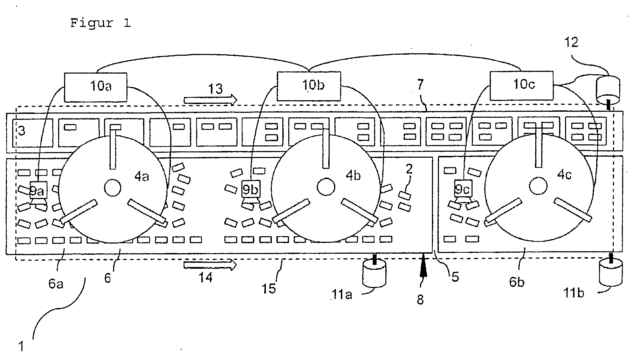

- Figur 1:: eine erste Ausführungsform einer Vorrichtung 1,

In der Figur 1 ist in der Aufsicht eine Vorrichtung 1 in Form einer Roboterstrasse dargestellt, bei der in Laufrichtung 13, 14, also von links nach rechts, Produkte 2, die willkürlich auf einer Transporteinrichtung 6 mit zwei Transportabschnitten 6a, 6b angeordnet sind, unter den Einlegerobotern 4a, 4b, 4c durchlaufen. Parallel zur Transporteinrichtung 6 der Produkte 2 verläuft eine Transporteinrichtung 7 auf welchem leere und teilbefüllte Behälter 3 transportiert werden. Die Arbeitsbereiche aller Einlegeroboter 4a, 4b, 4c definieren den Umsetzbereich 15.

Mittels Sensoren 9a, 9b, 9c kann die Steuerung 10a, 10b, 10c die Lage und Orientierung der Produkte 2 relativ zur Transporteinrichtung 6 erkennen. Mittels der Positionsencoder 11a, 11b lässt sich jederzeit die aktuelle Lage der Produkte 2 relativ zu den Einlegerobotern 4a, 4b, 4c errechnen. Analog lassen sich die aktuelle Lage der Behälter 3 auf der Transporteinrichtung 7 über den Positionsencoder 12 errechnen. Entsprechend können die Einlegeroboter 4a, 4b, 4c angesteuert werden, Produkte 2 zu ergreifen und in die Behälter 3 abzulegen.

Die beiden Transportabschnitten 6a, 6b der Produkttransporteinrichtung 6 sind durch eine Trennstelle 5 getrennt. Vor der Trennstelle 5 ist ein Sensor 8 installiert. Sobald Produkte 2 auf dem ersten Transportabschnitt 6a der Produkttransporteinrichtung 6 die Trennstelle 5 erreichen, wird der zweite Transportabschnitt 6b der Produkttransporteinrichtung 6 von der Steuerung 10c mit gleicher Geschwindigkeit wie der erste Transportabschnitt 6a vorwärts bewegt, so dass die Produkte 2 ähnlich einem kontinuierlichen Produkttransport fortbewegt werden. Die Geschwindigkeit wird aufgrund der zeitlichen Änderung der Positionsencoder 11a, 11b abgeschätzt. Die Steuerung 10c ist eine dezentrale Steuerung des Einlegeroboters 4c. Es versteht sich von selbst, dass die Steuerung der Einlegeroboter 4a, 4b, 4c und/oder der Transportabschnitte 6a, 6b von einer zentralen Steuerung aus kontrolliert werden kann. Detektiert der Sensor 8 eine Lücke im Produktteppich auf dem Transportabschnitt 6a vor der Trennstelle 5, wird der zweite Transportabschnitt 6b von der Steuerung 10c angehalten.

Um auch bei Transporteinrichtungen 6, welche mehrere Produkte 2 nebeneinander transportieren, zu schliessende Lücken zu schaffen, werden die Einlegeroboter 4a, 4b, 4c derart angesteuert, in Bereichen mit geringer Dichte an Produkten zu greifen.

Um nur komplett befüllte Behälter 3 aus dem Umsetzbereich 15 zu lassen, kann die Transporteinrichtung 7 der Behälter 3 derart gesteuert werden, dass keine nicht komplett befüllte Behälter 3 den Arbeitsbereich des letzten Einlegeroboters 4c oder bei dessen Ausfall des zweitletzten Einlegeroboters 4b verlassen.

## Patentansprüche

1. Verfahren zum Einsetzen von mindestens einer Sorte von herangeführten Produkten (2) in eine bestimmte Anzahl von Produkten (2) aufnehmende Behälter (3) mittels einer Vorrichtung (1), welche mindestens zwei Einlegeroboter (4a, 4b, 4c) definierend einen Umsetzbereich (15), mindestens eine Transporteinrichtung (6) zum Transportieren der Produkte (2) und mindestens eine Transporteinrichtung (7) zum Transportieren der Behälter (3) aufweist, wobei die Transporteinrichtung (6) zum Transportieren der Produkte (2) und die Transporteinrichtung (7) zum Transportieren der Behälter (3) im Gleichstrom oder in Gleichstromwirkweise arbeiten, **wobei**
die Transporteinrichtung (6) der Produkte (2) innerhalb des Umsetzbereichs (15) mindestens eine Trennstelle (5) in Laufrichtung (14) aufweist, welche die Transporteinrichtung (6) der Produkte (2) in mindestens zwei unabhängig ansteuerbare Transportabschnitte (6a, 6b) aufteilt, derart, dass ermöglicht wird, dass im Falle eines Ausräumens der Transporteinrichtung (6) durch einen Einlegeroboter eine entstandene Lücke eliminiert und nicht an den nachfolgenden Einlegeroboter übergeben wird , wobei die Produkte (2) auf der Transporteinrichtung (6) für die Produkte (2) zum Umsetzbereich (15) transportiert werden und im Umsetzbereich (15) von den Einlegerobotern (4a, 4b, 4c) ergriffen und in die Behälter (3) eingesetzt werden, und wobei
die Anwesenheit von Produkten (2) vor der Trennstelle (5) überprüft wird und der nachfolgende Transportabschnitt (6b) entsprechend gesteuert wird.

2. Verfahren nach Anspruch 1,
**dadurch gekennzeichnet, dass**
bei fehlenden Produkten (2) vor einer Trennstelle (5) der nachfolgende Transportabschnitt (6b) verlangsamt oder gestoppt wird.

3. Verfahren nach Anspruch 1 oder 2,
**dadurch gekennzeichnet, dass**
die Einlegeroboter (4a, 4b, 4c) die Produkte (2) in Bereichen mit geringer Produktdichte ergreifen.

4. Verfahren nach einem der Ansprüche 1 bis 3,
**dadurch gekennzeichnet, dass**
der letzte Einlegeroboter (4c) oder bei dessen Ausfall der zweitletzte Einlegeroboter (4b) der Vorrichtung (1) die Geschwindigkeit der Transporteinrichtung (7) der Behälter (3) derart steuert, dass nur volle Behälter (3) die Vorrichtung (1) verlassen.

5. Verfahren nach einem der Ansprüche 1 bis 4,
**dadurch gekennzeichnet, dass**
in Laufrichtung (13) der Behälter für jeden Arbeitsbereich der Einlegeroboter (4a, 4b, 4c) ein Sollfüllstand ansteigend festgelegt wird und dadurch, dass
jeder Einlegeroboter (4a, 4b, 4c) derart gesteuert wird, dass dieser nur bis zum Erreichen des Sollfüllstandes für seinen Arbeitsbereich Produkte (2) umsetzt.

6. Verfahren nach einem der Ansprüche 1 bis 5,
**dadurch gekennzeichnet, dass**
jeder Trennstelle (5) ein Sensor (8) zur Überprüfung der Anwesenheit von Produkten (2) vor der Trennstelle (5) zugeordnet ist.

7. Verfahren nach Anspruch 6
**dadurch gekennzeichnet, dass**
die Vorrichtung (1) Steuerungsmittel (10a, 10b, 10c) aufweist, welche derart ausgebildet sind, dass die Transportabschnitte (6a, 6b) in Abhängigkeit eines Signals des Sensors (8) angesteuert werden.

8. Verfahren nach einem der Ansprüche 1 bis 7
**dadurch gekennzeichnet, dass**
die Vorrichtung (1) Steuerungsmittel (10a, 10b, 10c) aufweist, welche derart ausgebildet sind, dass die Einlegeroboter (4a, 4b, 4c) in Bereichen mit geringer Produktedichte die Produkte ergreifen.

## Claims

1. Method for inserting at least one sort of conveyed products (2) into containers (3) accommodating a specific number of products (2) by means of an apparatus (1),
the apparatus (1) having at least two placing robots (4a, 4b, 4c) defining a transfer area (15), at least one transport device (6) for transporting the products (2), and at least one transport device (7) for transporting the containers (3), the transport device (6) for transporting the products (2) and the transport device (7) for transporting the containers (3) are conveyed in co-current flow or in the co-current flow mode of action,
the transport device (6) for the products (2) has at least one separation point (5) in the direction of travel (14) within the transfer area (15), said separation point dividing the transport device (6) for the products (2) into at least two transport portions (6a, 6b) that can be actuated independently of one another, such that a gap produced if the transport device is cleared by a placing robot is eliminated and thus not transferred to the subsequent placing robot,
the products (2) being transported to the transfer area (15) on the transport device (6) for the products (2) and being grasped in the transfer area (15) by the placing robots (4a, 4b, 4c) and placed into the containers (3), and wherein
the presence of products (2) before the separation point (5) is checked and the subsequent transport portion (6b) is controlled accordingly.

2. Method according to Claim 1,
**characterized in that**
if there are no products (2) before a separation point (5), the subsequent transport portion (6b) is slowed or stopped.

3. Method according to Claim 1 or 2, **characterized in that**
the placing robots (4a, 4b, 4c) grasp the products (2) in areas of low product density.

4. Method according to one of Claims 1 to 3, **characterized in that**
the last placing robot (4c) or, in the event of failure thereof, the second-to-last placing robot (4b) of the apparatus (1) controls the speed of the transport device (7) for the containers (3) in such a way that only full containers (3) leave the apparatus (1).

5. Method according to one of Claims 1 to 4, **characterized in that**
a target fill level is determined increasingly for each working area of the placing robots (4a, 4b, 4c) in the direction of travel (13) of the containers, and **in that**
each placing robot (4a, 4b, 4c) is controlled in such a way that it only transfers products (2) until the target fill level for its working area is reached.

6. Method according to one of Claims 1 to 5, **characterized in that**
each separation point (5) is assigned a sensor (8) for checking the presence of products (2) before the separation point (5).

7. Method according to Claim 6,
**characterized in that**
the apparatus (1) has control means (10a, 10b, 10c) that are designed in such a way that the transport portions (6a, 6b) are actuated according to a signal of the sensor (8).

8. Method according to one of Claims 1 to 7,
**characterized in that**
the apparatus (1) has control means (10a, 10b, 10c) that are designed in such a way that the placing robots (4a, 4b, 4c) grasp the products in areas of low product density.

## Revendications

1. Procédé d'insertion d'au moins un type de produits acheminés (2) dans des récipients (3) recevant un nombre déterminé de produits (2) au moyen d'un dispositif (1),
le dispositif (1) présentant au moins deux robots d'insertion (4a, 4b, 4c) définissant une région de transfert (15), au moins un dispositif de transport (6) pour transporter les produits (2) et au moins un dispositif de transport (7) pour transporter les récipients (3),
le dispositif de transport (6) pour transporter les produits (2) et le dispositif de transport (7) pour transporter les récipients (3) sont acheminés en flux continu ou suivant un mode d'action à flux continu,
le dispositif de transport (6) des produits (2) présente à l'intérieur de la région de transfert (15) au moins une zone de séparation (5) dans la direction d'avance (14), laquelle divise le dispositif de transport (6) des produits (2) en au moins deux sections de transport (6a, 6b) pouvant être commandées indépendamment, de telle sorte qu'il est possible d'éliminer un espace qui s'est creusé et de ne pas le transférer au robots d'insertion suivant,
les produits (2) étant transportés sur le dispositif de transport (6) pour les produits (2) jusqu'à la région de transfert (15) et étant saisis dans la région de transfert (15) par les robots d'insertion (4a, 4b, 4c) et étant insérés dans les récipients (3),
la présence de produits (2) avant la zone de séparation (5) est contrôlée et la section de transport suivante (6b) est commandée de manière correspondante.

2. Procédé selon la revendication 1,
**caractérisé en ce**
**qu'**en l'absence de produits (2) avant une zone de séparation (5), la section de transport suivante (6b) est ralentie ou arrêtée.

3. Procédé selon la revendication 1 ou 2,
**caractérisé en ce que**
les robots d'insertion (4a, 4b, 4c) saisissent les produits (2) dans des régions à faible densité de produits.

4. Procédé selon l'une quelconque des revendications 1 à 3,
**caractérisé en ce que**
le dernier robot d'insertion (4c), ou en cas de panne de celui-ci, l'avant-dernier robot d'insertion (4b) du dispositif (1) commande la vitesse du dispositif de transport (7) des récipients (3) de telle sorte que seulement des récipients pleins (3) quittent le dispositif (1).

5. Procédé selon l'une quelconque des revendications 1 à 4,
**caractérisé en ce que**
dans la direction d'avance (13) des récipients pour chaque région de travail des robots d'insertion (4a, 4b, 4c) un niveau de remplissage de consigne croissant est constaté et
**en ce que** chaque robot d'insertion (4a, 4b, 4c) est commandé de telle sorte que celui-ci ne transfère des produits (2) que jusqu'à ce que le niveau de remplissage de consigne pour sa région de travail soit atteint.

6. Procédé selon l'une quelconque des revendications 1 à 5,
**caractérisé en ce**
**qu'**un capteur (8) pour contrôler la présence de produits (2) avant la zone de séparation (5) est associé à chaque zone de séparation (5).

7. Procédé selon la revendication 6,
caractérisé en ce
le dispositif (1) présente des moyens de commande (10a, 10b, 10c) qui sont réalisés de telle sorte que les sections de transport (6a, 6b) soient commandées en fonction d'un signal du capteur (8).

8. Procédé selon l'une quelconque des revendications 1 à 7,
**caractérisé en ce que**
le dispositif (1) présente des moyens de commande (10a, 10b, 10c) qui sont réalisés de telle sorte que les robots d'insertion (4a, 4b, 4c) saisissent les produits dans des régions à faible densité de produits.
